**Europäisches Patentamt**

**European Patent Office**

**Office européen des brevets**

(19)

(11) Veröffentlichungsnummer: **0 008 770**
**B1**

(12) # EUROPÄISCHE PATENTSCHRIFT

(45) Veröffentlichungstag der Patentschrift:
30.12.81

(51) Int. Cl.³: **B 01 D 53/34** // F23J7/00

(21) Anmeldenummer: **79103191.7**

(22) Anmeldetag: **29.08.79**

(54) **Anlage zur Abscheidung von gasförmigen Schadstoffen aus Rauchgasen.**

(30) Priorität: **12.09.78 DE 2839541**

(43) Veröffentlichungstag der Anmeldung:
**19.03.80 Patentblatt 80/6**

(45) Bekanntmachung des Hinweises auf die Patenterteilung:
**30.12.81 Patentblatt 81/52**

(84) Benannte Vertragsstaaten:
**BE CH DE FR GB LU NL SE**

(56) Entgegenhaltungen:
**DE-A-2 225 686**
**DE-A-2 246 806**
**DE-A1-2 615 828**
**DE-U-7 716 772**
**US-A-3 093 465**

(73) Patentinhaber: **Apparatebau Rothemühle Brandt & Kritzler, Wildenburger Strasse, 5963 Wenden 5 - Rothemühle (DE)**

(72) Erfinder: **Kritzler, Gerhard, Dipl.-Ing., Fliessenhardtstrasse 27, D-5905 Freudenberg (DE)**

(74) Vertreter: **Hemmerich, Friedrich Werner et al, Patentanwälte HEMMERICH-MÜLLER-GROSSE-POLLMEIER Berliner Allee 41, D-4000 Düsseldorf 1 (DE)**

Anlage zur Abscheidung von gasförmigen Schadstoffen aus Rauchgasen

Die Erfindung betrifft eine Anlage zur Abscheidung von gasförmigen Schadstoffen, wie Chlorwasserstoff, Fluorwasserstoff und Schwefeloxyd, aus Rauchgasen, insbesondere von Müllverbrennungsanlagen, durch Reaktion mit staubförmigen Additiven, wie Branntkalk (CaO) oder Calciumcarbonat (CaCO$_3$), und Bindung an diese. Die Anlage umfasst dabei mehrere in Strömungsrichtung der Rauchgase hintereinandergeschaltete Strömstrecken aufweisende Rohrkaskaden, die durch Zwischenschaltung von Zyklonabscheidern verbunden sind sowie in den Durchströmstrecken aufweisende Rohrkaskaden, die durch Zwischenschaltung von Zyklonabscheidern verbunden sind sowie in den Durchströmstrecken der Rohrkaskaden angebrachte Dosierrohre für Additive, wobei das in die letzte Rohrkaskade hineinragende Dosierrohr mit einer Zuführleitung für frische Additive versehen ist, während die anderen Dosierrohre jeweils mit dem nachgeschalteten Zyklonabscheider der – in Richtung des Gasstromes gesehen – nachfolgenden Rohrkaskade verbunden sind.

Eine Anlage zur Abscheidung von gasförmigen Schadstoffen aus Rauchgasen dieser Gattung ist bereits durch die DE-A 2 615 828 bekannt. Bei dieser Anlage werden die Additive in im wesentlichen waagrechten Abschnitten der Rohrkaskaden in den Rauchgasstrom eingegeben, wobei jedem dieser waagrechten Abschnitte ein im wesentlichen senkrecht angeordneter Abscheider nachgeschaltet ist. Die im Abscheider gesammelten Additive werden dann wieder – gegen die Richtung des Gasstromes gesehen – in die nachfolgende Rohrkaskade eingegeben. In jedem Falle erfolgt die Eingabe der Additive in die im wesentlichen waagrechten Abschnitte der Rohrkaskaden von unten her, und zwar durch zwischen die einzelnen Abscheider und die von ihnen zu speisenden Rohrkaskaden angeordnete Fördervorrichtungen mit zugehörigen Zwischenbehältern. Die Eingabe der Additive in die im wesentlichen waagrechten Abschnitte der einzelnen Rohrkaskaden erfolgt dabei jeweils – in Richtung des Gasstromes gesehen – vor einer Venturistrecke, um dadurch eine intensive Verwirbelung zwischen den Additiven und dem Gasstrom zu erreichen und so eine schnellere Reaktion desselben mit den Additiven zu bewirken.

Die bekannte Anlage zur Abscheidung von gasförmigen Schadstoffen aus Rauchgasen hat jedoch verschiedene Nachteile. Einerseits arbeitet sie nämlich nur mit einem mittelbaren Gegenstromeffekt zwischen den Gasen und den Additiven, weil letztere praktisch in Richtung der Gasströmung in die waagrechten Abschnitte der Rohrkaskaden gegeben werden. Deshalb ist es auch unumgänglich, jede der Rohrkaskaden in ihrem im wesentlichen waagrechten Abschnitt mit einer Venturistrecke auszustatten, um die für die Reaktion notwendige intensive Vermischung zwischen dem Gasstrom und den Additiven sicherzustellen.

Abgesehen davon, dass der bauliche Aufwand für die einzelnen Rohrkaskaden durch die notwendigen Venturistrecken erhöht wird, liegt ein Nachteil auch noch darin, dass unerwünschte Ablagerungen von Additiven in den waagrechten Durchströmstrecken, und zwar hinter den Abstreifringen der Venturistrecken, nicht sicher vermieden werden können.

Der Erfindung liegt die Aufgabe zugrunde, eine Anlage zur Abscheidung von gasförmigen Schadstoffen aus Rauchgasen der gattungsgemässen Art zu schaffen, die mit vermindertem baulichen Aufwand errichtet werden kann, dabei Ablagerungen von Additiven in den Rohrkaskaden sicher verhindert und schliesslich auf einfache Weise das Einbringen der Additive in den Rauchgasstrom nach dem echten Gegenstromprinzip gewährleistet.

Die Lösung dieser Aufgabe wird nach der Erfindung dadurch erreicht, dass die Dosierrohre in vertikalen Abschnitten der Rohrkaskaden angeordnet sind und dabei mit dem Auslauf des der nächstoberen Rohrkaskade nachgeschalteten Zyklonabscheiders in Verbindung stehen, und dass die ungeradzahligen Rohrkaskaden mit den Zyklonabscheidern der geradzahligen Rohrkaskaden sowie die geradzahligen Rohrkaskaden mit den Zyklonabscheidern der ungeradzahligen Rohrkaskaden in vertikaler Achsfluchtlage angeordnet sind.

Das Einbringen der Additive in die vertikalen Abschnitte der Rohrkaskaden nach dem echten Gegenstromprinzip hat einerseits den Vorteil, dass sie sich mit dem Gasstrom auch ohne das Vorhandensein von Venturistrecken intensiv vermischen und dadurch eine schnelle und intensive Reaktion gewährleisten. Andererseits wird aber auch sichergestellt, dass die vom Gasstrom nicht mitgerissenen Additive unmittelbar nach abwärts in den nächstunteren Zyklon gelangen, von wo aus sie dann sicher in den von dessen Dosierrohr gespeisten vertikalen Abschnitt der weiter stromaufwärts gelegenen Rohrkaskade gelangen.

Ein vorteilhaftes Weiterbildungsmerkmal für eine erfindungsgemässe Abscheideanlage besteht auch darin, dass der Auslauf des der ersten Rohrkaskade nachgeschalteten Zyklonabscheiders über eine Schleuse mit einem Fördersystem, vorzugsweise einem Druckluftförderer, gekoppelt ist, der mit einem Vorratsbehälter in Verbindung steht, welcher wiederum dem Dosierrohr vorzugsweise der letzten Rohrkaskade zugeordnet ist.

Die gesamte Anlage benötigt also nur ein einziges Fördersystem für den Rücktransport der Additive, während alle dem Zudosieren der Additive dienlichen Vorrichtungsteile verhältnismässig einfach ausgebildet sein können.

Als zweckmässig hat es sich nach der Erfindung ferner erwiesen, wenn das dem Vorratsbehälter nachgeordnete Dosierrohr über ein Gabelrohr einerseits mit der Dosierschleuse des Vorratsbehälters für frische Additive sowie andererseits mit einer Dosierschleuse des Vorratsbehälters für die angereicherten Additive in Verbindung steht.

Auf einfache Weise ist hierdurch nämlich die Möglichkeit gegeben, den vertikalen Abschnitt der letzten Rohrkaskade wahlweise mit frischen Additiven, mit bereits angereicherten Additiven oder aber mit einer Mischung aus frischen und angereicherten Additiven zu beschicken.

Nach einem anderen Merkmal der Erfindung ist vorgesehen, den Vorratsbehälter für die angereicherten Additive nicht nur mit der Dosierschleuse, sondern noch mit einem weiteren Abzugsorgan, vorzugsweise mit Abzugsschiebern oder Dosierschleusen, zu versehen, um dadurch das Entfernen weitgehend verbrauchter Additive aus dem Arbeitszyklus zu ermöglichen.

Nach einem weiterbildenden Erfindungsmerkmal können die Dosierschleusen durch Zellradschleusen oder Doppelpendelklappen gebildet werden.

Der Aufbau der erfindungsgemässen Abscheideanlage lässt sich schliesslich auch noch dadurch vereinfachen, dass die der ersten bis vorletzten Rohrkaskade nachgeordneten Zyklonabscheider Arbeitszyklone (Reaktoren) sind, während der der letzten Rohrkaskade nachgeordnete Zyklonabscheider ein reiner Abscheiderzyklon ist.

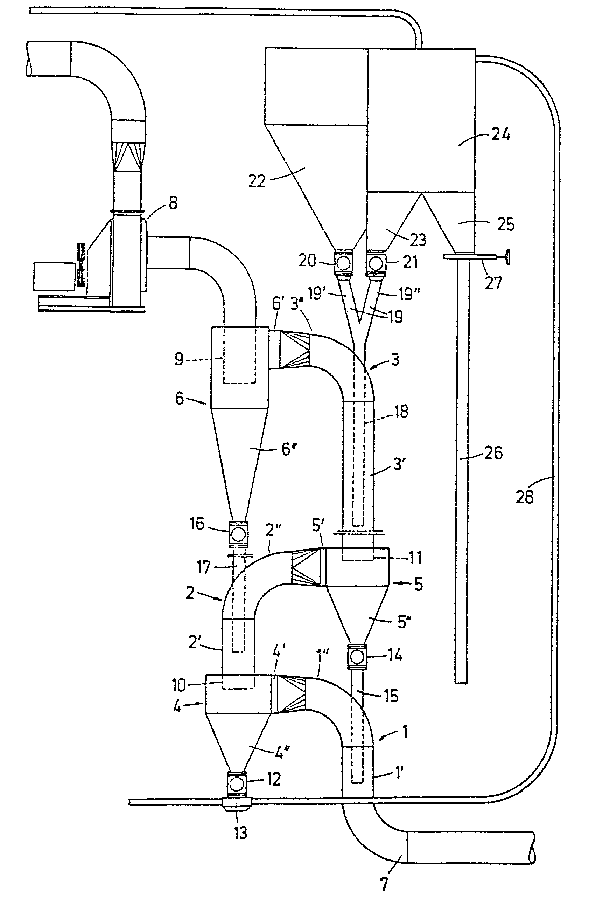

In der einzigen Figur der Zeichnung ist in schematischer Darstellung der grundsätzliche Aufbau einer Anlage zur Abscheidung gasförmiger Schadstoffe aus Rauchgasen gezeigt.

Diese Abscheideanlage weist mehrere, und zwar mindestens drei Rohrkaskaden 1, 2 . . . 3 auf, die miteinander durch zwischengeschaltete Zyklonabscheider 4 . . . 5 in Strömungsverbindung stehen, welche Arbeitszyklone bilden, während die oberste Rohrkaskade im Ausführungsbeispiel die Rohrkaskade 3, in einen reinen Abscheidezyklon mündet.

Die untere Rohrkaskade 1 steht mit einer Rauchgaszuleitung 7 in Verbindung, während ein Saugzug 8 an das Tauchrohr 9 des Abscheidezyklons 6 angeschlossen ist.

Jede der Rohrkaskaden 1, 2 . . . 3 hat eine im wesentlichen vertikale Durchströmstrecke 1', 2', 3', an die sich ein Rohrkrümmer 1'', 2'', 3'' anschliesst, der wiederum in den Rohgaseintritt 4', 5', 6' der Zyklonabscheider 4, 5, 6 mündet.

Während das untere Ende der aufrechten Durchströmstrecke 1' der Rohrkaskade 1 unmittelbar an die Rauchgaszuleitung 7 angeschlossen ist, stehen die Durchströmstrecken 2' bzw. 3' der übrigen Rophrkaskaden 2 . . . 3 jeweils mit Tauchrohr 10 bzw. 11 des vorgeordneten Zyklonabscheiders 4 . . . 5 in Verbindung.

Die Abscheideanlage ist zweckmässigerweise so aufgebaut, dass die aufwärts gerichteten Durchströmstrecken 1', 3' der ungeradzahligen Rohrkaskaden 1 und 3 mit den den geradzahligen Rohrkaskaden 2 nachgeordneten Zyklonabscheidern 5 und die aufwärts gerichteten Durchströmstrecken 2' der geradzahligen Rohrkaskaden 2 mit den ungeradzahligen Rohrkaskaden 1 und 3 nachgeordneter Zyklonabscheidern 4 und 6 in vertikaler Achsfluchtlage angeordnet sind.

Der Auslauf 4'' des Zyklonabscheiders 4 steht an seinem unteren Ende mit einer Schleuse 12, beispielsweise einer Zellradschleuse oder einer Doppelpendelklappe, in Verbindung, der ein Druckluftförderer 13 nachgeordnet ist.

Der Auslauf 5'' des Zyklonabscheiders 5 ist an seinem unteren Ende mit einer Schleuse 14 verbunden, die ebenfalls durch eine Zellradschleuse oder eine Doppelpendelklappe gebildet werden kann. An diese Schleuse 14 sachliesst sich nach unten ein Dosierrohr 15 an, welches vertikal in die Rohrkaskade 1 hineingeführt ist und koaxial zu deren aufwärts gerichteter Durchströmstrecke 1' angeordnet ist. Das untere Ende des Dosierrohres 15 hat dabei einen gewissen Abstand vom unteren Ende der aufwärts gerichteten Durchströmstrecke 1'.

Auch der Auslauf 6'' des Zyklonabscheiders 6 ist an seinem unteren Ende mit einer Schleuse 16 verbunden, die wiederum eine Zellradschleuse oder eine Doppelpendelklappe sein kann und mit einem Dosierrohr 17 zusammenarbeitet, welches vertikal in die Rohrkaskade 2 hineingeführt ist. Auch das Dosierrohr 17 erstreckt sich koaxial zur aufwärts gerichteten Durchströmstrecke 2' der Rohrkaskade und ragt bis zu einer Stelle herab, die einen gewissen Abstand vom unteren Ende des Tauchrohres 10 hat.

Koaxial zur aufwärts gerichteten Durchströmstrecke 3' der Rohrkaskade 3 ist ein Dosierrohr 18 angeordnet, dessen unteres Ende einen gewissen Abstand vom unteren Ende des Tauchrohres 11 im Zyklonabscheider 5 hat.

Oben schliesst sich an das Dosierrohr 18 ein Gabelrohr 19 an, dessen Zweigstück 19' mit einer Dosierschleuse 20 und dessen Zweigstück 19'' mit einer Dosierschleuse 21 verbunden ist. Auch diese beiden Dosierschleusen 20 und 21 können als Zellradschleusen oder Doppelpendelklappen ausgeführt sein.

Die Dosierschleuse 20 steht mit dem Auslaufrichter eines Vorratsbehälters 22 in Verbindung, in welchen beispielsweise frischer Branntkalt (CaO) oder Caliumcarbonat (CaCO₃) eingefüllt ist.

Die Zellradschleuse 21 ist hingegen mit einem Auslauftrichter 23 eines Vorratsbehälters 24 verbunden, welcher noch einen weiteren Auslauftrichter 25 hat. Die beiden Auslauftrichter 23 und 25 sind dabei dem Vorratsbehälter 24 so zugeordnet, dass sie jeweils nur aus einem Teilquerschnitt des Vorratsbehälters 24 beschickt werden können. An den Auslauftrichter 25 schliesst sich ein Abzugsrohr 26 an, welches über einen Schieber 27 wahlweise geöffnet oder verschlossen werden kann. Anstelle des Schiebers 27 kann auch ein freier Auslauf oder eine Dosierschleuse vorgesehen sein.

Der Vorratsbehälter 24 ist über eine Rohrleistung 28 mit dem Druckluftförderer 13 verbunden.

Durch den Saugzug 8 wird dem in die Rauchgaszuleitung einströmenden Rauchgas eine bestimmte Strömungsgeschwindigkeit aufgezwungen, die es auf seinem Weg durch die Rohrkaskaden 1, 2 ... 3 und die Zyklonabscheider 4, 5 ...6 beibehält.

Im Gegenstrom zur Bewegungsrichtung des Rauchgases wird durch jedes der Dosierrohre 15, 17, 18 Branntkalk oder Calciumcarbonat in durch die einzelnen Dosierschleusen 20 und/oder 21 bestimmten Mengen in die Rohrkaskaden so eingegeben, dass es sich möglichst gleichmässig im Rauchgasstrom verteilt. Dabei reagiert das Rauchgas mit den Additiven in der Weise, dass besipielsweise das darin enthaltene Chlor sich an die Additive anlagert und von diesen gebunden wird.

Die Dosierschleusen 20 und/oder 21 werden so eingestellt, dass die Additive im Rauchgas eine Konzentration zwischen 100 und 500 g/m$^3$ erreichen und damit in einem stöchiometrischen Verhältnis von 40 bis 200 liegen.

Die Reaktion der Rauchgase mit den Additiven findet dabei einerseits in den einzelnen Rohrkaskaden 1, 2 ...3 und andererseits auch noch in den zwischengestalteten Zyklonabscheidern 4 und 5 statt, d. h. die Zyklonabscheider 4 und 5 bilden sogenannte Arbeitszyklone bzw. Reaktoren.

Der letzte in Strömungsrichtung der Rauchgase angeordnete Zyklonabscheider 6 hat vorwiegend die Aufgabe, die in den Rauchgasen enthaltenen Additive abzuscheiden, sobald die Rauchgase die letzte Rohrkaskade 3 verlassen.

Aus den vorstehend gemachten Darlegung ergibt sich deutlich, dass verfahrenstechnisch gesehen die Additive (Branntkalk und/oder Calciumcarbonat) an mehreren kaskadenartig aufeinander folgenden Stellen, nämlich innerhalb der Rohrkaskaden 1, 2 ...3 in im wesentlichen aufwärts gerichtete Abschnitte 1', 2' ...3' des Rauchgasstromes eingegeben werden. Daran anschliessend werden dann jeweils hinter im wesentlichen waagrechten Strömungsstrecken 1'', 2'' ... 3'' diese Additive durch Wirbelbildung in den Zyklonabscheidern 4, 5 ...6 wieder aus dem Rauchgasstrom abgeschieden. Die abgeschiedenen Additive werden dabei über die Ausläufe 4'', 5'' ... 6'' abgeführt. Während die hinter der ersten Rohrkaskade 1 durch den Zyklonabscheider 4 aus dem Rauchgas entfernten Additive über die Schleuse 12 und den Druckluftförderer 13 in den Vorratsbehälter 24 gelangen, werden die hinter der Rohrkaskade 2 durch den Zyklonabscheider 5 aus dem Rauchgas entfernten Additive über die Schleuse 14 und das Dosierrohr 15 wieder in die vorhergehende Rohrkaskade 1 eingeführt.

In die letzte Rohrkaskade 3 werden frische Additive aus dem Vorratsbehälter 22 über die Dosierschleuse 20 und das Dosierrohr 18 eingeführt und gleichzeitig können auch in einer gewissen Teilmenge bereits angereicherte Additive aus dem Vorratsbehälter 24 über die Dosierschleuse 21 und das Dosierrohr 18 in die Rohrkaskade 3 gelangen.

Die hinter der Rohrkaskade 3 im Zyklonabscheider 6 vom Rauchgas getrennten Additive werden über die Dosierschleuse 16 und das Dosierrohr 17 nochmals in die vorhergehende Rohrkaskade im gezeigten Ausführungsbeispiel in die Rohrkaskade 2, eingeleitet.

Durch diese gewissermassen im Gegenstrom zur Rauchgasbewegung erfolgende Zudosierung der Additive wird also im stationären Betrieb der Abscheideanlage erreicht, dass die Additive dort den grössten Anreicherungsgrad aufweisen, wo auch die Rauchgase den grössten Schadstoffgehalt besitzen, während der Anreicherungsgrad der Additive, in Strömungsrichtung der Rauchgase betrachtet, entsprechend geringer ist und sich deshalb deren Reaktionsvermögen umgekehrt proportional zum Schadstoffgehalt der Rauchgase verhält.

Durch das mehrfache Einbringen der Additive an einer grösseren Anzahl von Stellen in den Rauchgasstrom wird deren Reaktions- und Bindungsvermögen auf einfache Weise optimal ausgenutzt, bis es praktisch erschöpft ist und dann aus dem Vorratsbehälter 24 durch das Abzugsrohr 26 entfernt werden können.

Der kaskadenartige Aufbau der Abscheideanlage macht es auf einfache Art und Weise möglich, diese auf unterschiedliche Bedürfnisse der Praxis abzustimmen, und zwar einfach dadurch, dass die Anzahl der in Strömungsrichtung der Rauchgase hintereinandergeschalteten Rohrkaskaden und Zyklonabscheider entsprechend variiert wird.

Abschliessend sei noch darauf hingewiesen, dass die Ausbildung der Schleusen als Zellradschleusen oder Doppelpendelklappen auch noch insofern vorteilhaft ist, als mit ihrer Hilfe falsche Strömungswege für die Rauchgase unterbunden werden.

## Patentansprüche

1. Anlage zur Abscheidung von gasförmigen Schadstoffen, wie Chlorwasserstoff, Fluorwasserstoff und Schwefeloxyd, aus Rauchgasen, insbesondere von Müllverbrennungsanlagen, durch Reaktion mit staubförmigen Additiven, wie Branntkalk (CaO) oder Calciumcarbonat ($CaCO_3$), und Bindung an diese, bestehend aus mehreren in Strömungsrichtung der Rauchgase hintereinandergeschalteten Durchströmstrecken aufweisenden Rohrkaskaden (1, 2, ... 3), die durch Zwischenschaltung von Zyklonabscheidern (4, ... 5) verbunden sind und aus in die Durchströmstrecken der Rohrkaskaden angebrachten Dosierrohren (15, 17, ... 18) für die Additive, wobei das in die letzte Rohrkaskade hineinragende Dosierrohr (18) mit einer Zuführleitung (19) für frische Additive versehen ist, während die anderen Dosierrohre jeweils mit dem nachgeschalteten Zyklonabscheider der – in Richtung des Gasstromes gesehen – nachfolgenden Rohrkaskade verbunden sind.

dadurch gekennzeichnet,
dass die Dosierrohre (15, 17, ... 18) in vertikalen Abschnitten (1', 2', ... 3') der Rohrkaskaden (1, 2, ... 3) angeordnet sind und mit dem Auslauf (5", 6") des der nächstoberen Rohrkaskade (2, ... 3) nachgeschalteten Zyklonabscheiders (5, ... 6) in Verbindung stehen, und dass die ungeradzahligen Rohrkaskaden (1, 3) mit den Zyklonabscheidern (5) der geradzahligen Rohrkaskaden (2) sowie die geradzahligen Rohrkaskaden (2) mit den Zyklonabscheidern (4, 6) der ungeradzahligen Rohrkaskaden (1, 3) in vertikaler Achsfluchtlage angeordnet sind.

2. Abscheideanlage nach Anspruch 1,
dadurch gekennzeichnet,
dass der Auslauf (4") des der ersten Rohrkaskade (1) nachgeschalteten Zyklonabscheiders (4) über eine Schleuse (12) mit einem Fördersystem (13), vorzugsweise einem Druckluftförderer, gekoppelt ist, der mit einem Vorratsbehälter (24) in Verbindung steht, welcher wiederrum dem Dosierrohr (18) vorzugsweise der letzten Rohrkaskade (3) zugeordnet ist.

3. Abscheideanlage nach einem der Ansprüche 1 und 2,
dadurch gekennzeichnet,
dass das dem Vorratsbehälter (24) nachgeordnete Dosierrohr (18) über ein Gabelrohr (19) einerseits mit der Dosierschleuse (20) des Vorratsbehälters (2) für frische Additive sowie andererseits mit einer Dosierschleuse (21) des Vorratsbehälters (24) für die angereicherten Additive in Verbindung steht.

4. Abscheideanlage nach einem der Ansprüche 1 bis 3,
dadurch gekennzeichnet,
dass der Vorratsbehälter (24) für die angereicherten Additive neben der Dosierschleuse (21) mit einem weiteren Abzugsorgan, vorzugsweise mit Abzugsschiebern (27) oder Dosierschleusen, versehen ist.

5. Abscheideanlagen nach einem der Ansprüche 1 bis 4,
dadurch gekennzeichnet,
dass die Dosierschleusen (12, 14, 16, 20, 21) durch Zellradschleusen oder Dopelpendelklappen gebildet sind.

6. Abscheideanlage nach einem der Ansprüche 1 bis 5,
dadurch gekennzeichnet,
dass die der ersten bis vorletzten Rohrkaskade (1, 2) nachgeordneten Zyklonabscheider (4, 5) Arbeitszyklone (Reaktoren) sind, während der der letzten Rohrkaskade (3) nachgeordnete Zyklonabscheider (1) ein reiner Abscheidezyklon ist.

## Claims

1. Installation for separating gaseous noxious substances, such as hydrogen chloride, hydrogen fluoride and sulphur oxide, from flue gases, more especially of refuse-incineration plants, by reaction with pulverulent additives, such as quicklime (CaO) or calcium carbonate ($CaCO_3$), and bonding to these latter, consisting of a plurality of pipe cascades (1, 2.. 3) comprising throughflow sections connected in series in the direction of flow of the flue gases, which cascades are connected by interposition of cyclone separators (4 ... 5). and of proportioning tubes (15, 17 ... 18) for the additives and arranged in the through-flow sections of the pipe cascades, the proportioning tube (18) projecting into the last pipe cascade being provided with a supply pipe (19') for fresh additives, while the other proportioning tubes are respectively connected of that cyclone separator, connected on the output side, of the following pipe cascade, seen in the direction of gas flow,
characterised in that the proportioning tubes (15, 17 ... 18) are arranged in vertical sections (1', 2', ... 3') of the pipe cascades (1, 2 ... 3) and communicate with the outlet (5", 6") of the cyclone separator (5 ... 6) connected on the output side of the next upper pipe cascades (2 ... 3), and that the odd-numbered pipe cascades (1, 3) are arranged in vertical axial alignment with the cyclone separators (5) of the even-numbered pipe cascades (2) and the even-numbered pipe cascades (2) are arranged in vertical axial alignment with the cyclone separators (4, 6) of the odd-numbered pipe cascades (1, 3).

2. Separating installations according to claim 1, characterised in that the outlet (4")of the cyclone separator (4) connected following the first pipe cascade (1) is coupled by way of a lock chamber or trap (12) to a conveyor system (13), advantageously a compressed air conveyor, which communicates with a storage container (24), which in turn is associated with the proportioning tube (18), advantageously of the last pipe cascade (3).

3. Separating installation according to one of claims 1 and 2, characterised in that the proportioning tube (18) arranged following the storage container (24) is connected by way of a forked tube (19), on the one side, to the proportioning lock chamber (20) of the storage container (22) for fresh additives and, on the other side, to a proportioning lock chamber (21) of the storage container (24) for the concentrates additives.

4. Separating installation according to one of claims 1 to 3, characterised in that the storage container (24) for the concentrated additives is provided alongside the proportioning lock chamber (21) with an additional outlet member, advantageously with discharge slide members (27) or proportioning lock chambers.

5. Separating installation according to one of claims 1 to 4, characterised in that the lock chambers (12, 14, 16, 20, 21) are formed by bucket wheel locks or double pendulum flaps.

6. Separating installation according to one of claims 1 to 5, characterised in that the cyclone separators (4, 5) arranged following the first to the penultimate pipe cascades (1, 2) are working cyclones (reactors), while the cyclone separator (1) arranged following the last pipe cascade (3) is an ordinary separating cyclone.

## Revendications

1. Installation pour séparer de gaz de fumée, notamment de gaz issus d'installations d'incinération d'ordures ménagères, les corps nocifs tels que l'acide chlorhydrique, l'acide fluorhydrique et le gaz sulfureux que ses gaz contiennent, par réaction avec des additifs pulvérulents tels que de la chaux (CaO) ou du carbonate de calcium ($CaCO_3$) et liaison de ceux-ci, composée de plusieurs cascades tubulaires (1, 2, . . . 3) qui forment des parcours d'écoulement en série et sont reliées entre elles par interposition de cyclones séparateurs (4, . . . 5), et de tubes doseurs d'additifs (15, 17, . . . 18) fixés dans les parcours d'écoulement des cascades tubulaires, le tube doseur (18) qui pénètre dans la dernière cascade tubulaire étant muni d'une conduite d'amenée (19') d'additifs frais, tandis que les autres tubes doseurs sont reliés chacun au cyclone séparateur suivant de la cascade tubulaire située en aval dans la direction du courant de gaz, cette installation étant remarquable en ce que les tubes doseurs (15, 17, . . . 18) sont disposés dans des tronçons verticaux (1', 2', . . . 3') des cascades tubulaires (1, 2, . . . 3) et sont reliés à la sortie (5", 6") du cyclone séparateur (5, . . . 6) installé à la suite de la cascade tubulaire (2, . . . 3) immédiatement supérieure, et en ce que les cascades tubulaires de nombre impair (1, 3) sont disposées dans l'axe vertical des cascades tubulaires de nombre pair (2), tandis que les cascades tubulaires de nombre pair (2) sont disposées dans l'axe vertical des cyclones séparateurs (4, 6) des cascades tubulaires de nombre impair (1, 3).

2. Installation de séparation selon la revendication 1, remarquable en ce que la sortie (4") du cyclone séparateur (4) placé à la suite de la première cascade tubulaire (1) est raccordée par l'intermédiaire d'un sas (12) à un système de transport (13) de préférence à air comprimé, relié à un réservoir (24) affecté au tube doseur (18) de préférence de la dernière cascade tubulaire (3).

3. Installation de séparation selon la revendication 1 ou 2, remarquable en ce que le tube doseur (18) branché à la sortie du réservoir (24) est accouplé, par l'intermédiaire d'une culotte (19), au sas doseur (20) du réservoir d'additifs frais (22) d'une part, à un sas doseur (21) du réservoir d'additifs enrichis (24) d'autre part.

4. Installation de séparation selon l'une des revendications 1 à 3, remarquable en ce que le réservoir d'additifs enrichis (24) est muni, à côté du sas doseur (21), d'un autre organe de prélèvement, de préférence de registres d'évacuation (27) ou de sas doseurs.

5. Installations de séparation selon l'une des revendications 1 à 4, remarquable en ce que les sas doseurs (12, 14, 16, 20, 21) sont constitués par des sas à roue celulaire ou par des volets pendulaires doubles.

6. Installation de séparation selon l'une des revendications 1 à 5, remarquable en ce que les cyclones séparateurs (4, 5) disposés à la suite des première et avant-dernière cascades tubulaires (1, 2) sont des cyclones de travail (réacteurs), tandis que le cyclone séparateur (6) en aval de la dernière cascade tubulaire (3) est un cyclone purement séparateur.